# EUROPÄISCHE PATENTANMELDUNG

(11) **EP 0 586 935 A2**
(43) Veröffentlichungstag der Anmeldung: **16.03.1994**
(21) Anmeldenummer: 93113162.7
(22) Anmeldetag: 17.08.1993
(51) Int. Cl.: F16D 1/09, F16D 1/08

(54) **Klemmkupplung**

(30) Priorität: 11.09.1992 DE 4230446
(71) Anmelder: LITTON PRECISION PRODUCTS INTERNATIONAL, INC., D-85774 Unterföhring (DE)
(72) Erfinder: Geroldinger, Arnold, D-85774 Unterföhring (DE); Breit, Wolfgang, D-81673 München (DE); Nöscher, Valentin, D-82544 Egling (DE)
(74) Vertreter: TER MEER - MÜLLER - STEINMEISTER & PARTNER

(57) **Zusammenfassung**

Die Wellen-/Nabenklemmkupplung weist in einer radialen Ringnut (7 bzw. 8) einen geteilten, vorgespannten Federring (3) auf, der über eine achsial wirkende Druckschraube (5) gegen die gegenüberliegende Nutwand gedrückt wird, die vorzugsweise eine kegelige 45°-Abschrägung aufweist. Die Klemmung durch den Federspannring (3) kann sowohl an der Welle (2) als auch an der Nabe (1) bewirkt werden.

Eine erfindungsgemäße Klemmkupplung ist einfach aufgebaut, gestattet jedoch die rutschfreie Übertragung vergleichsweise hoher Drehmomente.

## Beschreibung

Die Erfindung betrifft eine Klemmkupplung, die sich durch eine hochwirksame Klemmung zwischen einer Welle und der damit zu verbindenden Nabe auszeichnet. Die technischen Mittel der Kupplung sind einfach und bestehen im wesentlichen aus nur zwei zusätzlichen Teilen oder Teilegruppen. Die Klemmkupplung gewährleistet auch bei hohen zu übertragenden Drehmomenten eine positionsgenaue, unverrückbare Fixierung der Welle relativ zur Nabe.

Eine erfindungsgemäße Klemmkupplung ist gemäß einer ersten grundsätzlichen Lösung gekennzeichnet durch
- eine im Bereich einer Stirnseite angebrachte, achsparallele Umlaufnut oder Abdrehung am Mantel des Wellenstumpfs mit kegeliger Abschrägung nach außen, an dem der Wellenstumpfstirnseite abgekehrten Ende,
- einen in die Nut oder die Abdrehung eingreifenden, auf den Wellenstumpf aufgeschobenen, geteilten Federspannring, dessen Drahtdurchmesser In Axialrichtung dem Abstand zwischen dem achsparallel verlaufenden Bereich der Nut oder der Abdrehung und der Bohrung der mit der Welle zu verbindenden Nabe entspricht, und durch
- ein axial wirkendes, festziehbares Druckelement, welches den Federspannring gegen die kegelige Abschrägung drückt.

Eine erfindungsgemäße Klemmkupplung ist gemäß einer zweiten grundsätzlichen Lösung gekennzeichnet durch
- eine im Bereich wenigstens einer Stirnseite der mit einer Welle zu verbindenen Nabe angebrachten, umlaufenden, achsparallelen Nabenbohrungserweiterung mit kegeliger Abschrägung am der betreffenden Stirnseite abgekehrten Ende,
- einen in die Nabenbohrungserweiterung eingeschobenen Federspannring, dessen Drahtdurchmesser in Axialrichtung dem Abstand zwischen dem achsparallelverlaufenden Bereich der Nabenbohrungserweiterung und der mit der Habe zu verbindenen Welle entspricht, und durch
- ein achsparallel, wirkendes, festziehbares Druckelement, welches den Federspannring gegen die kegelige Abschrägung drückt.

Vorzugsweise besitzt der Federspannring - je nachdem, ob er für die erste oder die zweite grundsätzliche Ausführungsform der Erfindung verwendet wird - mindestens auf der mit der Nabenbohrungswand bzw. mit der Welle in Klemmkontakt stehenden Außen- bzw. Innenseite eine umlaufende, glatte Ringfläche.

Um das leichte Einsetzen des Federspannrings zu ermöglichen bzw. die durch das Druckelement an derjeweiligen kegeligen Abschrägung bewirkte Aufweiten oder Verengen des Federspannrings zu erleichtern, ist dieser vorzugsweise geteilt und weist an den auf den Trannspalt zulaufenden Endenabschrägung auf.

Je nach Anwendungsart und erwünschtem oder erforderlichem Anpreßdruck für den Federspannring kommen als Druckelemente Druckschrauben, Ringmuttern, Druckplatten und dergleichen in Frage.

Die Erfindung und vorteilhafte Einzelheiten werden nachfolgend unter Bezug auf die Zeichnung in beisplelsweisen Ausführungsformen näher erläutert. Es zeigen:
**Fig. 1** in einer Schnittdarstellung die beiden grundsätzlichen Ausführungsformen einer erfindungsgemäßen Klemmkupplung;
**Fig. 2** eine vergrößerte Schnittdarstellung eines im Zusammenhang mit der Erfindung vorteilhaft zu verwendenden Federspannrings;
**Fig. 3** eine Einzeldarstellung des Federspannrings in etwa natürlicher Größe für eine bestimmte Anwendung;
**Fig. 4** eine vorteilhafte Ausführungsform einer Klemmkupplung gemäß der zweiten grundsätzlichen Lösung;
**Fig. 5** eine vorteilhafte Ausführungsform einer Klemmkupplung gemäß der ersten grundsätzlichen Lösung und
**Fig. 6** eine spezielle vorteilhafte Lösung für das Druckelement, die sich für beide grundätzliche Lösungsmöglichkeiten einer erfindungsgemäßen Klemmkupplung eignet.

Einander entsprechende Bauteile sind in den Figuren durch die gleichen Bezugshinweise gekennzeichnet.

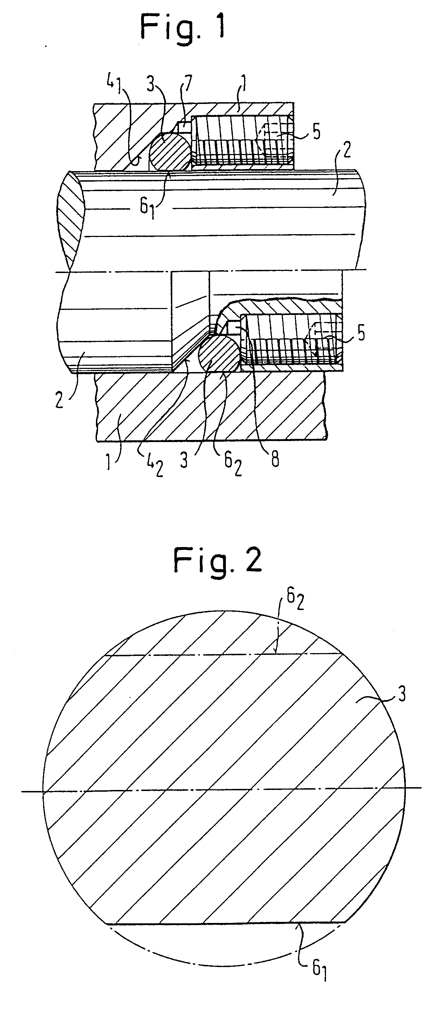

Die Fig. 1 zeigt in der oberen Hälfte ein Ausführungsbeispiel für die zweite grundsätzliche Lösungsvariante einer Klemmkupplung mit erfindungsgemäßen Merkmalen, während in der unteren Zeichnungshälfte die erste grundsätzliche Lösungsvariante veranschaulicht ist.

Eine Nabe 1 ist mittels einer lösbaren Klemmkupplung mit einer Welle 2 zu verbinden. In einer radialen Ringnut 7 der Nabe 1 einerseits bzw. in einer radialen Ringnut 8 im stirnseitigen Wellenstumpfende der Welle 2 andererseits, ist ein geteilter und vorgespannter Federspannring 3 eingelegt, der mindestens über eine, in der Regel jedoch über mehrere achsial wirkende Druckschrauben 5, die in die Stirnseite der Nabe 1 einerseits beziehungsweise in die Wellenstumpfstirnfläche der Welle 2 andererseits eingezogen sind, gegen die rückseitige Stirnwand der Ringnut 7 beziehungsweise 8 gedrückt. Diese endseitige Nutwand ist, wie die Zeichnung erkennen läßt, kegelig abgeschrägt, wie die Bezugshinweise 4₁ beziehungsweise 4₂ angeben. Der Federspannring 3 weist für die in Fig. 1 oben dargestellte, zweite grundlegende Ausführungsform der Erfindung auf der auf der Welle 2 aufliegenden und daraufgleitenden Fläche einen vorzugsweise geschliffenen Abtrag auf, so daß, wie die Fig. 2 erkennen läßt, innenseitig eine glatte Ringauflagefläche 6₁ entsteht, über die einerseits eine ausreichende Flächenpressung und andererseits bei gelöster Kupplung ein verkantfreies Gleiten des Federspannrings 3 verbessert wird.

Für die erste grundlegende Ausführungsform gilt hinsichtlich des Federspannrings 3 entsprechendes. In diesem Fall ist die glatte Ringfläche 6₂ am Federspannring 3 außenseitig vorhanden.

Die Abschrägungen 4₁ beziehungsweise 4₂ weisen vorzugsweise einen Winkel gegen die Achsrichtung von 45° auf. Anstatt der angedeuteten Druckschrauben 5 können auch solche mit Spitzeverwendet werden. In einem solchen Fall könnten die Wände der Nuten 7 beziehungsweise 8 je nach zu übertragendem Drehmoment, gegebenenfalls auch ohne die kegeligen Abschrägungen 4₁ beziehungsweise 4₂ ausgeführt sein.

Wie sich aus der Darstellung der Fig. 1 ersehen läßt, kann die Klemmung sowohl an der Nabe 1 als auch an der Welle 2 bewirkt werden. Es ist für die Funktion grundsätzlich ohne Bedeutung, welche der hier beschriebenen vorteilhaften Klemm-Methoden angewendet wird.

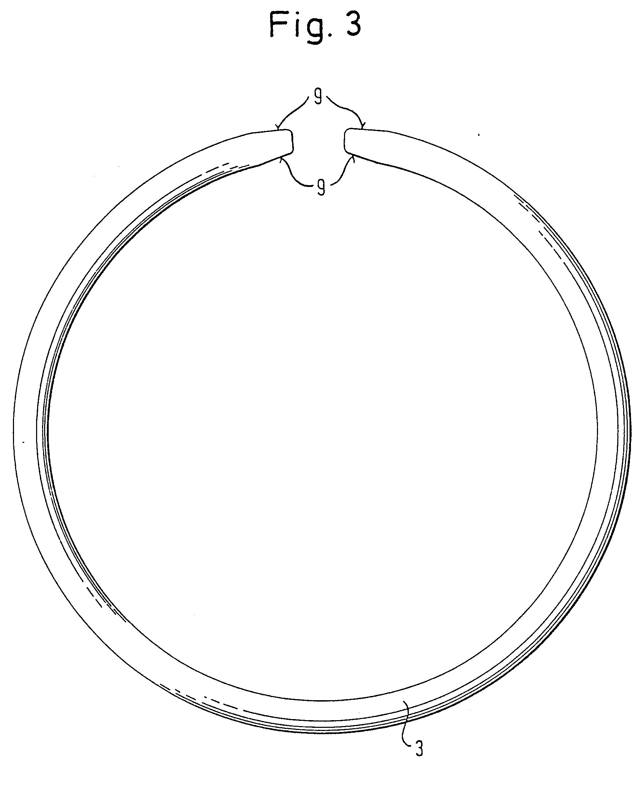

Die Fig. 3 zeigt speziell den geteilten Federspannring 3 in etwa natürlicher Größe. Dieserweist im Bereich des Teilungsspalts angeschrägte Flächen 9 auf.

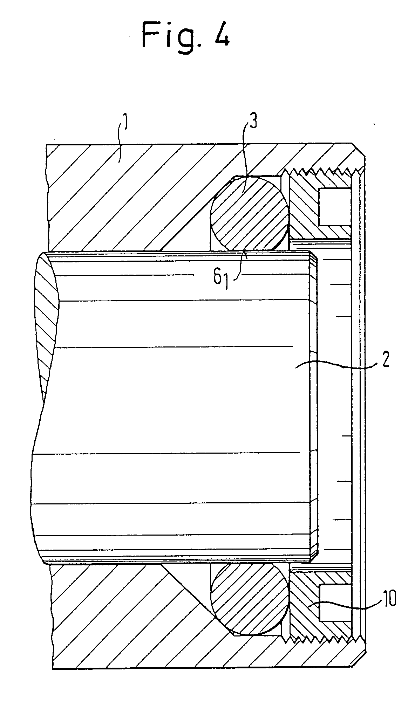

Die Fig. 4 verdeutlicht die Verwendung einer in die aufgeweitete Bohrung der Nabe 1 eingezogene Ringmutter 10 als auf den Federspannring 3 wirkendes Druckelement bei der zweiten Lösungsvariante einer erfindungsgemäßen Klemmkupplung.

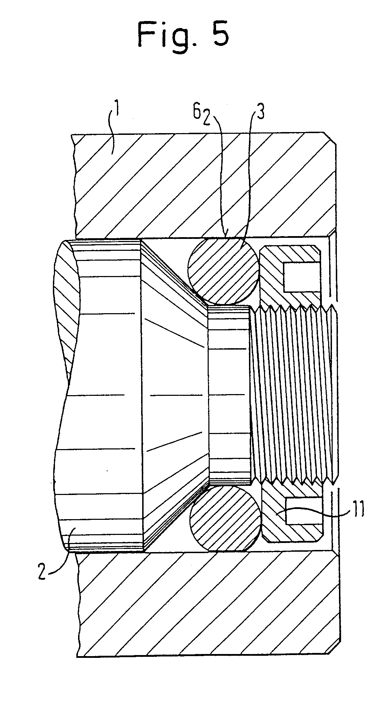

Bei der Ausführungsform nach Fig. 5 ist eine auf den endseitigen Stumpf der Welle 2 aufgezogene Wellenmutter 11 als auf den Federspannring 3 wirkendes Druckelement vorgesehen. wobei diese Ausführungsform ersichtlicherweise zur ersten Alternative einer erfindungsgemäßen Klemmkupplung zählt.

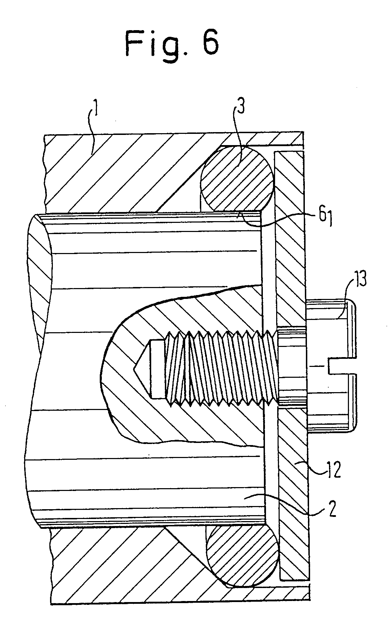

Schließlich zeigt die Fig. 6 bei Anwendung auf die zweite grundsätzliche Alternative einer Klemmkupplung mit erfindungsgemäßen Merkmalen die Verwendung einer ringförmigen Druckplatte 12, deren Druckwirkung zur Erzeugung der erwünschten Klemmung durch eine in die Wellenstumpfstirnfläche eingezogenen Schraube 13 einstellbar ist.

Schädigende Eindrücke an der Oberfläche der Welle 2 beziehungsweise an der Nabe 1 durch den Federspannring werden durch die Innen- bzw. außenseitigen Ringflächen 6₁ beziehungsweise 6₂ ausgeschlossen, wobei ersichtlicherweise durch diese Ringflächen eine höhere Reibwirkung zwischen dem Federspannring 3 und der Welle 2 beziehungsweise der Nabe 1 erreicht wird.

Wird eine sehr starke Wellen-/Nabenverbindung gewünscht, so kann eine erhöhte doppelte Klemmwirkung erreicht werden, wenn der Federspannring 3 sowohl innen als auch außenseitig mit der beschriebenen Ringfläche 6₁ beziehungsweise 6₂ versehen wird.

## Patentansprüche

1. Klemmkupplung, **gekennzeichnet durch**
- eine im Bereich einer Stirnfläche angebrachte achsparallele Umlaufnut (8) oder Abdrehung am Mantel des Wellenstumpfs mit kegeliger Abschrägung (4₂) nach außen, an dem der Wellenstumpfstirnseite abgekehrten Ende,
- einen in die Nut (8) oder die Abdrehung eingreifenden, auf den Wellenstumpf aufgeschobenen, geteilten Federspannring (3), dessen Drahtdurchmesser in Axialrichtung den Abstand zwischen dem achsparallelverlaufenden Bereich der Nut (8) oder der Abdrehung und der Bohrung der mit der Welle (2) zu verbindenden Nabe (1) entspricht, und durch
- ein axial wirkendes, festziehbares Druckelement (5; 11; 13), welches den Federspannring (3) gegen die kegelige Abschrägung (4₂) drückt.

2. Klemmkupplung, **gekennzeichnet durch**
- eine, im Bereich wenigstens einer Stirnseite der mit einer Welle (2) zu verbindenden Nabe (1) angebrachte umlaufende, achsparallele Nabenbohrungserweiterung (7) mit kegeliger Abschrägung (4₁) am der betreffenden Stirnseite abgekehrten Ende,
- einen in die Nabenbohrungserweiterung (7) eingeschobenen Federspannring (3), dessen Drahtdurchmesser in Axialrichtung dem Abstand zwischen dem achsparallelverlaufenden Bereich der Nabenbohrungserweiterung und dermit der Nabe (1) zu verbindenden Welle (2) entspricht, und durch
- ein axial wirkendes, festziehbahres Druckelement (5; 10; 12; 13), welches den Federspannring (3) gegen die kegelige Abschrägung (4₁) drückt.

3. Klemmkupplung nach Anspruch 1, **dadurch gekennzeichnet**, daß der Federspannring (3) mindestens auf der mit der Nabenbohrungswand in Klemmkontakt tretenden Außenseite eine umlaufende glatte Ringfläche (6₁) aufweist.

4. Klemmkupplung nach Anspruch 2, **dadurch gekennzeichnet**, daß der Federspannring (3) mindestens auf der mit der Welle (2) in Klemmkontakt stehenden Innenseite eine umlaufende glatte Ringfläche (6₁) aufweist.

5. Klemmkupplung nach einem der vorstehenden Ansprüche, **dadurch gekennzeichnet**, daß der Federspannring (3) geteilt ist und abgeschrägte Enden (9) im Bereich des Trennspalts aufweist.

6. Klemmkupplung nach Anspruch 1, **gekennzeichnet durch** eine Mehrzahl von stirnseitig in den Wellenstumpf in Ausrichtung auf die Umlaufnut (7) eingesetzte Druckschrauben (5), welche den Federspannring (3) in Axialrichtung gegen die kegelige Abschrägung (4₂) der Nut drücken.

7. Klemmkupplung nach Anspruch 1, **gekennzeichnet durch** eine auf die Wellenstumpfabdrehung aufgezogene Wellenmutter (11), welche den Federspannring (3) In Axialrichtung gegen die kegelige Abschrägung drückt.

8. Klemmkupplung nach Anspruch 2, **gekennzeichnet durch** eine Mehrzahl von stirnseitig in die Nabe in axialer Richtung auf die Nabbohrungserweiterung eingesetzte Druckschrauben (5), welche den Federspannring (3) in Axialrichtung gegen die kegelige Abschrägung (4₁) der Umlaufnut (7) drücken.

9. Klemmkupplung nach Anspruch 2, **dadurch gekennzeichnet**, daß die Nabenbohrungserweiterung als von der Nabenstirnfläche ausgehende Bohrungserweiterung mit einem stirnseitigen Innengewinde ausgeführt ist, und daß als axial wirkendes Druckelement eine Ringmutter (10) mit Außengewinde in die Bohrungserweiterung eingezogen ist, welche den Federspannring (3) gegen die kegelige Abschrägung (4₁) drückt.

10. Klemmkupplung nach einem der vorstehenden Ansprüche, **dadurch gekennzeichnet**, daß als axial wirkendes Druckelement eine Ringplatte (12) dient, die mit dem Wellenstumpf und/oder mit der Stirnseite der Habe verschraubt ist und welche den Federspannring (3) gegen die kegelige Abschrägung (4₂ bzw. 4₁) drückt.
